(19) Europäisches Patentamt / European Patent Office / Office européen des brevets

(11) **EP 3 963 301 B1**

(12) **EUROPÄISCHE PATENTSCHRIFT**

(45) Veröffentlichungstag und Bekanntmachung des Hinweises auf die Patenterteilung:
**22.01.2025   Patentblatt 2025/04**

(21) Anmeldenummer: **20719591.8**

(22) Anmeldetag: **07.04.2020**

(51) Internationale Patentklassifikation (IPC):
*G01L 7/02* (2006.01)     *F04B 15/02* (2006.01)
*G01L 9/00* (2006.01)     *F16L 57/06* (2006.01)
*F16L 9/18* (2006.01)

(52) Gemeinsame Patentklassifikation (CPC):
**F16L 57/06; F04B 15/02; F04B 53/16; F16L 9/18;
G01L 7/02;** F04B 17/06

(86) Internationale Anmeldenummer:
**PCT/EP2020/059846**

(87) Internationale Veröffentlichungsnummer:
**WO 2020/221560 (05.11.2020 Gazette 2020/45)**

(54) **ROHRLEITUNG, DICKSTOFFPUMPE UND VERFAHREN ZUR BESTIMMUNG EINES DRUCKS UND/ODER EINER WANDSTÄRKE IN DER ROHRLEITUNG**

PIPELINE, THICK-MATTER PUMP AND METHOD FOR DETERMINING A PRESSURE AND/OR A WALL THICKNESS IN THE PIPELINE

CANALISATION, POMPE À MATIÈRES ÉPAISSES ET PROCÉDÉ POUR DÉTERMINER UNE PRESSION ET/OU UNE ÉPAISSEUR DE PAROI DANS LA CANALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **30.04.2019   DE 102019206202**

(43) Veröffentlichungstag der Anmeldung:
**09.03.2022   Patentblatt 2022/10**

(73) Patentinhaber: **Putzmeister Engineering GmbH
72631 Aichtal (DE)**

(72) Erfinder:
• **HUTH, Tobias
  70327 Stuttgart (DE)**
• **KASTEN, Dr. Knut
  73760 Ostfildern (DE)**
• **MÜLLER, Ansgar
  70184 Stuttgart (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
EP-A1- 1 411 336          WO-A1-2019/032470
DE-A1- 10 238 163         DE-A1- 102015 109 450
DE-A1- 102016 110 299     DE-A1- 19 727 102
DE-A1- 4 206 576

EP 3 963 301 B1

**Beschreibung**

ANWENDUNGSGEBIET UND STAND DER TECHNIK

Die Erfindung betrifft eine Rohrleitung, die insbesondere zum Fördern von Dickstoff wie beispielsweise Beton verwendet wird, sowie ein Verfahren zur Bestimmung eines Drucks in einer solchen Rohrleitung. Außerdem betrifft die Erfindung eine Dickstoffpumpe mit einer solchen Rohrleitung.

In Rohrleitungen zum Fördern von Dickstoff wie beispielsweise Beton, wie sie insbesondere in einer sogenannten fahrbaren Betonpumpe verwendet werden, ist es von Bedeutung, einen Druck in der Leitung sowie einen Verschleißzustand dieser Leitung zu bestimmen, insbesondere eine Wandstärke. Die Bestimmung des Drucks ist wichtig, um sogenannte Verstopfungen sehr schnell feststellen zu können, bevor diese nur noch mit viel Aufwand oder gar nicht mehr beseitigt werden können und bevor direkte mechanische Schäden eintreten können. Die Bestimmung des Verschleißzustandes ist wichtig, weil ansonsten, gerade wenn der Dickstoff ein abrasives Material wie beispielsweise Beton mit Zuschlag ist, eine Leitung tatsächlich dünner und sogar durchgescheuert werden kann. Derartige Leitungen können dann gerade im Falle des Auftretens einer Verstopfung platzen mit daraus resultierender Gefahr für anwesende Personen und unerwartetem Ausfall einer Dickstoffpumpe.

Das Einbringen von Drucksensoren in die Leitung ist schwierig und fehleranfällig, da diese Drucksensoren direkt mit dem zu fördernden Dickstoff in Kontakt kommen, was gerade im Fall von Beton Schwierigkeiten bereitet und die Drucksensoren beschädigt.

Aus der EP 1 411 336 A1 ist es bekannt, Druckänderungen in einer Rohrleitung zu erfassen, insbesondere bei Hochdruck. Dazu sind Messkammern unterschiedlichen Durchmessers in einer Art Rohrleitung vorgesehen, an deren Außenseite Dehnmessstreifen angebracht sind. Durch deren jeweils unterschiedliche Ausdehnung abhängig vom Anbringungsort und der dort gegebenen Wandstärke aufgrund des Durchmessers kann ein Druck bestimmt werden.

Aus der DE 102 381 63 A1 ist eine weitere Möglichkeit bekannt, wie ein hoher Druck in einer Rohrleitung bestimmt werden kann. Dazu ist ein einstückig ausgebildeter Verformungskörper an der Rohrleitung vorgesehen, an dessen Außenseite Dehnmessstreifen angebracht sind. Diese können eine Verformung des Verformungskörpers bestimmen, woraus wiederum der Druck bzw. eine Druckänderung bestimmt werden können.

Aus der DE 197 27 102 A1 ist allgemein eine Zwei-Zylinder-Dickstoffpumpe bekannt, wie sie beispielsweise in sogenannten Betonpumpen verwendet wird. Diese Dickstoffpumpe weist eine Rohrweiche auf.

Aus der WO 2019/032470 A1 ist eine weitere Vorrichtung samt Möglichkeit bekannt, wie ein Druck in einer Rohrleitung erfasst werden kann. Auch hier weist ein einteilig und einstückig ausgebildetes Rohrstück zwei direkt aneinander anschließende Bereiche mit unterschiedlicher Wandstärke auf. Um deren unterschiedliche Ausdehnung aufgrund desselben Innendrucks feststellen zu können, sind außen Sensoren mit Dehnmessstreifen aufgebracht.

Aus der DE 42 06 576 A1 ist eine weitere Dickstoffpumpe bekannt, bei der mittels eines Drucksensors ein Förderdruck in einer Förderleitung gemessen werden soll. Dieser Drucksensor ist allerdings separat mittels eines kurzen Leitungsstücks an die Förderleitung angeschlossen.

Aus der DE 10 2016 110 299 A1 ist ein weiterer Drucksensor bekannt, der einen Sensorkörper mit einer Leitung darin aufweist, der einstückig und einteilig ausgebildet ist sowie unterschiedliche Wandstärken aufweist. Eine druckabhängige Verformung, die bei den unterschiedlichen Abschnitten mit unterschiedlicher Wandstärke unterschiedlich ist, kann mittels einer Dehnungsmessoberfläche bzw. entsprechenden Dehnmessstreifen erfasst werden. Dadurch kann der Druck in der Leitung im Inneren des Sensorkörpers berechnet werden.

Aus der DE 10 2015 109 450 A1 ist eine weitere Möglichkeit bekannt, wie ein Druck einer durch eine Rohrleitung strömenden Flüssigkeit gemessen werden kann. Dazu sind außen an der Rohrleitung Sensoren angebracht, die mit Schalleinstrahlung in ein Messrohr der Rohrleitung arbeiten, wobei das Messrohr einteilig und einstückig ausgebildet ist. Mit wechselndem bzw. ansteigendem Druck ändern sich elastische Eigenschaften des Messrohrs wie insbesondere eine Resonanzfrequenz. Dies kann von den Sensoren erfasst werden und in einen Druck innerhalb des Messrohrs umgerechnet werden.

AUFGABE UND LÖSUNG

Der Erfindung liegt die Aufgabe zugrunde, eine eingangs genannte Rohrleitung, eine eingangs genannte Dickstoffpumpe sowie ein eingangs genanntes Verfahren zur Bestimmung von Druck in einer solchen Rohrleitung zu schaffen, mit denen Probleme des Standes der Technik gelöst werden können und es insbesondere möglich ist, einen Druck und/oder einen Verschleißzustand der Rohrleitung einfach, dauerhaft und zuverlässig bestimmen zu können.

Gelöst wird diese Aufgabe durch eine Rohrleitung mit den Merkmalen des Anspruchs 1, durch eine Dickstoffpumpe mit den Merkmalen des Anspruchs 12 sowie durch ein Verfahren mit den Merkmalen des Anspruchs 13. Vorteilhafte sowie bevorzugte Ausgestaltungen der Erfindung sind in den weiteren Ansprüchen enthalten und werden im Folgenden näher erläutert. Dabei werden manche Merkmale nur für die Rohrleitung, nur für die Dickstoffpumpe oder nur für das Verfahren beschrieben. Sie sollen jedoch unabhängig davon sowohl für eine Rohrleitung als auch für eine Dickstoffpumpe und für ein Verfahren selbständig und unabhängig voneinander gelten können. Der Wortlaut der Ansprüche wird durch ausdrückliche Bezugnahme zum Inhalt der Beschreibung gemacht.

Es ist vorgesehen, dass die Rohrleitung Bestimmungsmittel zur Bestimmung eines Drucks in der Rohrleitung aufweist. Aus der Wandstärke der Rohrleitung kann dann ein Verschleißzustand dieser Leitung bestimmt werden. Dabei soll die Rohrleitung vorteilhaft zum Fördern von Dickstoff wie beispielsweise Beton, mit oder ohne Zuschläge, dienen. Die Rohrleitung weist einen ersten Längsabschnitt mit einer ersten Wandstärke und einen zweiten Längsabschnitt mit einer zweiten Wandstärke auf, wobei diese zweite Wandstärke größer ist als die erste Wandstärke. Es können auch noch mehr Längsabschnitte mit unterschiedlichen Wandstärken an der Rohrleitung vorgesehen sein, diese beiden aber sind auf alle Fälle vorgesehen.

Erfindungsgemäß weisen die genannten Bestimmungsmittel ein erstes Dehnmessmittel an einer Außenseite des ersten Längsabschnitts und ein zweites Dehnmessmittel an einer Außenseite des zweiten Längsabschnitts auf. Diese beiden Dehnmessmittel sind jeweils fest an ihren entsprechenden Längsabschnitten angebracht oder auf der Außenseite der Längsabschnitte aufgebracht. So können sie beispielsweise direkt darauf befestigt sein durch ein Verfahren, welches aus der Gruppe von Aufkleben, Aufschrauben, Aufschweißen, Auflöten, Aufschrumpfen oder Befestigen mit einer übergreifenden Schelle, insbesondere in Umfangsrichtung der Rohrleitung, ausgewählt ist. Alternativ können die Dehnmessmittel sozusagen an der Außenseite eines Längsabschnitts aufgelegt werden und dann durch Befestigungsmittel von außen befestigt werden, wozu beispielsweise eine vorgenannte Schelle dienen kann. Wichtig ist jedenfalls, dass die Dehnmessmittel an der Außenseite der Längsabschnitte verlaufen und nicht nur punktuell fest angebracht sind, sondern so angebracht sind, dass sie eine Längenänderung entlang ihres Verlaufs oder entlang ihrer Länge, die durch eine Dehnung und somit Weitung der Rohrleitung in diesem Bereich entsteht, erfassen können. Eine solche Dehnung kann nicht nur zwischen den Enden eines länglichen Dehnmessmittels auftreten, sondern auch in einem Bereich dazwischen. Sie soll in jedem Fall sicher und möglichst genau erfasst werden können.

In vorteilhafter Ausgestaltung der Erfindung verlaufen die ersten Dehnmessmittel und die zweiten Dehnmessmittel in derselben Richtung bzw. ihre Wirkrichtung und ihre Messrichtung ist dieselbe. Dann sind die Messergebnisse auch direkt vergleichbar, um daraus auf eine mögliche Dehnung schließen zu können, welche wiederum auftritt, weil ein Druck in der Rohrleitung über einem bestimmten Grenzwert liegt oder eine Wandstärke der Rohrleitung unter einem bestimmten Grenzwert liegt, so dass die Rohrleitung sich aufgrund der geringeren Stabilität etwas weitet bzw. dehnt. Eine solche Weitung der Rohrleitung kann zwar sehr gering sein, mit der hohen Genauigkeit von vielen Dehnmessmitteln wie beispielsweise Dehnmessstreifen kann dies dennoch genau erfasst werden.

Dehnmessmittel können allgemein ausgewählt sein aus einer Gruppe, die Dehnmessstreifen, elektrisch leitfähige Drähte, kraftmessende Einpress-Sensoren sowie Glasfasern enthält. Dehnmessstreifen sind dem Fachmann aus anderen Anwendungen bekannt und werden elektrisch betrieben bzw. angesteuert und ausgewertet. Elektrisch leitfähige Drähte werden in ähnlicher Form elektrisch angesteuert und ausgewertet. Dies gilt auch für die genannten kraftmessenden Einpress-Sensoren. Bei Glasfasern kann deren Länge und somit auch eine Längenveränderung als Dehnung optisch sehr genau erfasst werden mit an sich grundsätzlich vorhandener Messtechnik. Dazu sind die Glasfasern unter Umständen speziell ausgebildet und weisen mehrere Reflexionsebenen in der Glasfaser auf, die als Fertigungsdefekte bei der Glasfaserherstellung entstehen und so genutzt werden können. Alternativ können künstlich teilreflektierende Spiegel eingebracht werden. Dies ist auch möglich, und zwar auch bei vertretbarem Aufwand. Dadurch werden sozusagen Teilstücke in der Glasfaser geschaffen bzw. die Glasfaser wird in einzelne Längenabschnitte geteilt, deren Länge und somit auch Längenveränderung einzeln gemessen werden kann. Mit der erfindungsgemäßen jeweiligen Messung sind die Ergebnisse auch direkt vergleichbar, um daraus auf eine mögliche Dehnung schließen zu können. Eine sehr einfache Methode, weil ihre Verwendung auch häufig zur Messung von Verformungen verwendet wird, umfasst den Einsatz von Dehnmessstreifen.

In vorteilhafter Ausgestaltung der Erfindung weist mindestens ein Dehnmessmittel und/oder der zweite Längsabschnitt der Rohrleitung einen Abstand von mindestens einem Ende der Rohrleitung auf, der mindestens dem Innendurchmesser der Rohrleitung entspricht. Im Wesentlichen bedeutet dies, dass ein Dehnmessmittel bzw. der zweite Längsabschnitt der Rohrleitung nicht zu nahe an einem Ende der Rohrleitung angeordnet sein sollte. Vorteilhaft beträgt der Abstand sogar mindestens das Doppelte des Innendurchmessers der Rohrleitung, so dass ein deutlicher Abstand gegeben ist.

In nochmals weiterer Ausgestaltung der Erfindung sind das erste Dehnmessmittel und das zweite Dehnmessmittel länglich ausgebildet. Ihre Länge kann größer sein als ihre Breite. Vorteilhaft gilt dies vor allem für die vorgenannten Dehnmessstreifen. Es kann vorgesehen sein, dass beide Dehnmessmittel mit derselben Ausrichtung an der Rohrleitung angebracht sind, wie zuvor ausgeführt worden ist, und wenn sie länglich sind, ist dies besonders gut und definiert möglich. Ihre Ausdehnung kann einerseits so sein, dass ihre Längsrichtung in etwa entlang der Längsrichtung der Rohrleitung verläuft, vorteilhaft genau entlang der Längsrichtung der Rohrleitung. Alternativ kann die Längsrichtung der Dehnmessmittel auch davon abweichen, insbesondere in einem Winkel zwischen 10° und 90° dazu verlaufen. Bei einem Winkel von 90° verlaufen sie quer zur Längsrichtung der Rohrleitung bzw. entlang der Umfangsrichtung und können dann hier eine Änderung der Ausdehnung messen.

In weiterer Ausgestaltung der Erfindung ist es möglich, dass mindestens eines der Dehnmessmittel ein Dehnmessstreifen ist, der mehrere Teilstreifen aufweist bzw. in mehrere Teilstreifen aufgeteilt ist. Jeder dieser Teilstreifen bildet dabei einen Teil-Dehnmessstreifen mit einer Empfindlichkeit entlang jeweils genau einer Richtung, und man kann genau einen Messwert an ihm ablesen. So können beispielsweise zwei Teil-Dehnmessstreifen in einem Dehnmessmittel vorgesehen sein, die rechtwinklig zueinander verlaufen und somit sozusagen in zwei Richtungen messen können. So kann sozusagen eine Ausdehnung in der Fläche von diesem Dehnmessstreifen mit Messmitteln mit zwei Teil-Dehnmessstreifen erfasst werden. Auch hierfür ist eine entsprechende Ansteuerung und Auswertung bekannt.

Für die Rohrleitung selbst kann in Ausgestaltung der Erfindung vorgesehen sein, dass ein Innendurchmesser in beiden Längsabschnitten gleich ist. Vorteilhaft verläuft die Rohrleitung exakt gerade, so dass die Innendurchmesser auch sehr gut vergleichbar sind bzw. die Kontinuität der Innendurchmesser leicht und deutlich erkennbar ist. Der Vorteil einer solchen Rohrleitung mit gleichbleibendem Innendurchmesser kann auch darin liegen, dass dann der genannte Dickstoff wie beispielsweise Beton sehr gut und ohne Druckverlust bzw. zu großen Widerstand hindurchgepumpt werden kann.

In einer Ausgestaltung der Erfindung kann vorgesehen sein, dass die erfindungsgemäße Rohrleitung nur den ersten Längsabschnitt und den zweiten Längsabschnitt aufweist, also insgesamt nur zwei unterschiedliche Wandstärken. Dies kann bedeuten, dass keine weiteren oder anderen Längsabschnitte mit unterschiedlicher Wandstärke und/oder unterschiedlichem Innendurchmesser oder Außendurchmesser vorgesehen sind. Übliche Flansche an den Enden der Rohrleitungen oder sonstige Verbindungsmittel zum Verbinden mit weiteren Rohrleitungen, die erkennbar für diesen Zweck des Verbindens vorgesehen und ausgebildet sind, sollen hierbei nicht gezählt werden. Eine solche Rohrleitung kann dann relativ kurz sein, beispielsweise nur 0,5 m bis 1 m oder sogar bis 1,5 m lang sein. Sie dient dann eben dem Zweck der Messung des Drucks in einer Leitung beim Befördern von Dickstoff odgl. sowie möglicherweise eines Verschleißes. Dabei kann zur Vereinfachung davon ausgegangen werden, dass ein Verschleiß in einer Rohrleitung zumindest bei gleichem Innendurchmesser überall gleich ist, insbesondere unabhängig davon, wo an einer erfindungsgemäßen Dickstoffpumpe, also eher am Ende oder eher am Anfang einer Förderleitung, die Rohrleitung montiert ist.

In einer möglichen Ausgestaltung der Erfindung kann der erste Längsabschnitt direkt an den zweiten Längsabschnitt anschließen. Dabei erfolgt vorteilhaft ein Übergang in der Wandstärke zwischen den beiden Längsabschnitten. Einerseits ist es möglich, dass dieser Übergang zwischen der ersten Wandstärke und der zweiten Wandstärke abrupt ausgebildet ist als eine Art Stufe. Die Stufe kann direkt kantig ausgebildet sein, alternativ kann sie am Innenwinkel, möglicherweise auch am Außenwinkel, abgerundet sein und einen Radius von mindestens 2 % des Innendurchmessers der Rohrleitung aufweisen, vorzugsweise mindestens 5 % oder mindestens 10 %. Alternativ kann in einer anderen Ausgestaltung der Erfindung der Übergang allmählich erfolgen, so dass entweder eine gerade oder eine gebogene bzw. geschwungene Flanke vorliegt in der Seitenansicht.

An der Rohrleitung kann, wie zuvor angedeutet worden ist, an mindestens einem Ende ein Flansch vorgesehen sein. Damit kann die Rohrleitung an weitere Leitungen angeschlossen werden bzw. mit weiteren Leitungen verbunden werden. Vorteilhaft weist die Rohrleitung an beiden Enden jeweils einen Flansch für eine solche Anbindung oder Verbindung auf.

In vorteilhafter Ausgestaltung der Erfindung weist jeder der Längsbereiche einen gleichbleibenden Außendurchmesser auf, so dass gerade durch diesen Bereich gleichbleibenden Außendurchmessers jeweils ein Längsabschnitt definiert ist. Alternativ kann sich ein Außendurchmesser der Rohrleitung, insbesondere auch bei gleichbleibendem Innendurchmesser, gleichbleibend ändern. An unterschiedlichen Punkten entlang der Länge der Rohrleitung liegen dann eben unterschiedliche Außendurchmesser und somit unterschiedliche Wandstärken vor, wodurch sich die unterschiedlichen Längsabschnitte bzw. der erste Längsabschnitt und der zweite Längsabschnitt ergeben.

Bei der Erfindung weist die Rohrleitung ein Rohr mit einer durchgehend konstanten ersten Wandstärke auf, insbesondere auch mit durchgehend konstantem Innendurchmesser und Innenquerschnitt. Dieses Rohr bildet grundsätzlich den ersten Längsabschnitt. Für den zweiten Längsabschnitt ist ein Außenrohr als Manschette oder alternativ eine Schelle auf das Rohr aufgesetzt, wobei die Manschette oder Schelle eine zusätzliche Wandstärke entsprechend dem gewollten Unterschied zwischen der ersten Wandstärke und der zweiten Wandstärke bildet. Eine solche Rohrleitung wird also zweiteilig hergestellt. Die Manschette kann zur festen Verbindung mit der Rohrleitung befestigt sein, wobei sich hier Anschweißen oder Aufschrumpfen anbieten. Eine alternative offene Schelle kann mittels einer Schraube odgl. aufgeklemmt sein.

Nicht nur eine Wandstärke ist vorteilhaft im ersten Längsabschnitt und/oder im zweiten Längsabschnitt konstant, sondern auch ein Innendurchmesser bzw. Innenquerschnitt und ein Außendurchmesser bzw. Außenquerschnitt. Dann kann von jeweils gleichen und somit auch berechenbaren und vorhersehbaren Verhältnissen ausgegangen werden.

In einer Ausgestaltung der Erfindung beträgt die zweite Wandstärke 10 % bis 300 % mehr als die erste Wandstärke, ist also deutlich dicker. Vorteilhaft sind dies 75 % bis 250 %, also kann es beispielsweise etwa der Faktor 2 sein.

In weiterer möglicher Ausgestaltung der Erfindung ist in der Rohrleitung ein durchgehendes Innenrohr angeordnet. Dieses Innenrohr weist einen konstanten Innendurchmesser und eine konstante Wandstärke auf, vorteilhaft ist es mit einem kreisrunden Innenquerschnitt versehen. Die Wandstärke des Innenrohrs kann geringer sein als die erste Wandstärke. So kann sie beispielsweise 10 % bis 75 % der ersten Wandstärke betragen, vorteilhaft 25 % bis 50 %. Das Innenrohr kann flächig an der Innenseite der beiden Längsabschnitte anliegen, beispielsweise auch fest damit verbunden sein durch Einschrumpfen oder thermisches Schrumpfen. So kann das Innenrohr nahezu völlig fest mit der Rohrleitung verbunden sein. Des Weiteren ist es möglich, dieses Innenrohr so auszubilden, dass es verschleißfester ist als die Rohrleitung im Übrigen. Dies gilt vor allem für hindurchströmendes Material bzw. zu fördernden Dickstoff, insbesondere vorgenannten Beton. So kann eine Rohrleitung allgemein verschleißfester gemacht werden. Des Weiteren kann dies auch für eine Messung genutzt werden, beispielsweise als Vergleich zu anderen Rohrleitungen, die nicht mit derart verschleißfesten Innenrohren versehen sind.

Bei einer erfindungsgemäßen Dickstoffpumpe, die eine Förderleitung zum Fördern von Dickstoff aufweist, ist mindestens eine erfindungsgemäße Rohrleitung vorgesehen. Sie ist dabei in einem Weg des von der Dickstoffpumpe geförderten Dickstoffs angeordnet, also innerhalb der Förderleitung, beispielsweise relativ weit vorne zu Beginn der Förderleitung. Hier ist üblicherweise ein Druck in der Leitung beim Fördern von Dickstoff am größten, weil der Beginn der Förderleitung üblicherweise auch auf dem niedrigsten Höhenniveau liegt. Somit ist hier neben dem Druck auch die Verschleißanfälligkeit am größten, so dass vor allem hier ein Verschleiß in der Förderleitung durch eine eingesetzte erfindungsgemäße Rohrleitung erfasst werden sollte.

Um nun mit einer erfindungsgemäßen Rohrleitung einen Druck in der Rohrleitung und somit einen Verschleiß in der Rohrleitung zu erfassen, wird eine Längenänderung des ersten Dehnmessmittels und eine Längenänderung des zweiten Dehnmessmittels in der Umfangsrichtung der Rohrleitung und in der Längsrichtung der Rohrleitung bestimmt. Eine solche Längenänderung kann, insbesondere abhängig von der Art des Dehnmessmittels, relativ oder absolut sein. Dann kann unter Verwendung dieser erfassten Längenänderung beider Dehnmessmittel eine erste Wandstärke des ersten Längsabschnitts bestimmt werden. Dazu kann eine Querdehnzahl des Materials der Rohrleitung verwendet werden, ebenso kann eine Differenz bzw. ein Unterschied zwischen der ersten Wandstärke und der zweiten Wandstärke verwendet werden. Dies ist eigentlich aus sich heraus einleuchtend.

In weiterer Ausgestaltung der Erfindung kann aus der bestimmten ersten Wandstärke, mindestens der Längenänderungen in Umfangsrichtung, ob diese nun relativ oder absolut sind, und aus der Querdehnzahl des Materials der Rohrleitung der Druck innerhalb des ersten Längsabschnitts bestimmt werden. Dies dient eben zur vorbeschriebenen Erkennung von Verstopfungen in einer Förderleitung einer Dickstoffpumpe. Auf ähnliche Art kann dann unter zusätzlicher Hinzunahme der Differenz zwischen der ersten Wandstärke und der zweiten Wandstärke der Druck innerhalb des zweiten Längsabschnitts bestimmt werden. Werden dann der erste Druck und der zweite Druck gemittelt, kann ein Druck innerhalb der gesamten Rohrleitung bestimmt werden, zumindest ein durchschnittlicher Druck sowie ein maximaler Druck als eine Art Druckspitze. Dabei kann vorgesehen sein, dass für den Fall, dass ein zuvor beschriebenes Innenrohr in der Rohrleitung vorhanden ist, die Wandstärke dieses Innenrohrs zur ersten Wandstärke und zur zweiten Wandstärke addiert wird. Schließlich muss dieses Innenrohr ähnlich mitgedehnt werden wie wenn die Rohrleitung an sich eine entsprechend größere Wandstärke hätte.

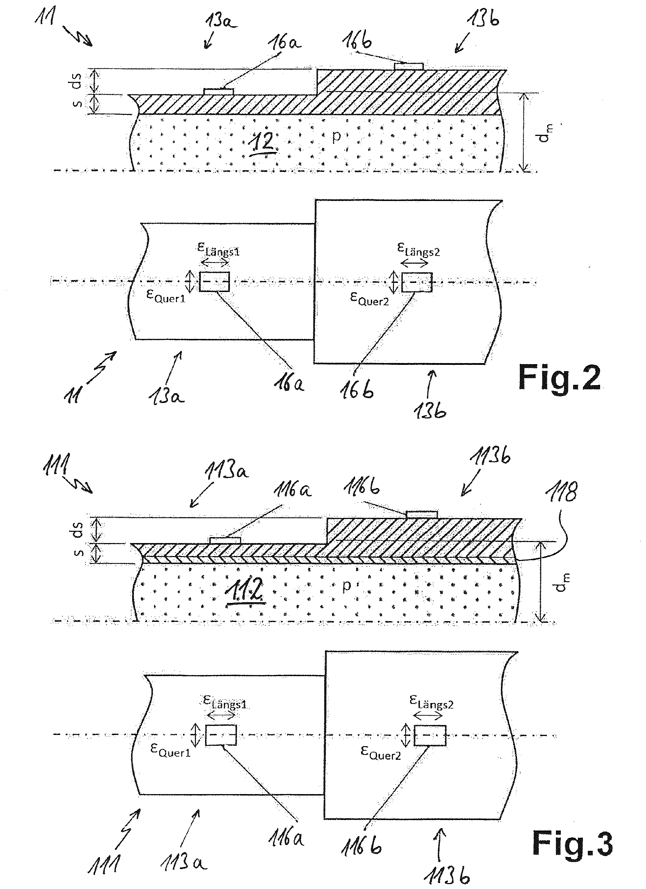

In vorteilhafter Ausgestaltung der Erfindung kann vorgesehen sein, dass bei den Berechnungen für beide Längsabschnitte der Rohrleitung, wie sie zuvor dargelegt worden sind, die Längenänderungen des Dehnmessmittels in Längsrichtung der Rohrleitung und in Umfangsrichtung der Rohrleitung berücksichtigt werden, seien es nun relative oder absolute Längenänderungen. Dies erfolgt vorteilhaft, indem jeweils zu dem Produkt aus der jeweiligen Längenänderung, sei sie relativ oder absolut, in Längsrichtung und aus der Querdehnzahl die Längenänderung in Umfangsrichtung addiert wird für einen Längsabschnitt, wobei auch diese Längenänderung jeweils relativ oder absolut genommen werden kann wie im Übrigen auch. Diese Summe wird mit der Differenz der Wandstärken multipliziert, wobei dieses Ergebnis dann wiederum dividiert wird durch die Differenz zwischen dem Produkt aus der Längenänderung in Längsrichtung und der Querdehnzahl plus die Längenänderung in Umfangsrichtung für den ersten Längsabschnitt und dem Produkt aus der Längenänderung in Längsrichtung und der Querdehnzahl plus die Längenänderung in Umfangsrichtung für den zweiten Längsabschnitt. Besonders vorteilhaft kann für beide Längsabschnitte der Rohrleitung eine Formel verwendet werden, wie sie in der Beschreibung zur Fig. 2 erläutert wird.

Diese Berechnung ist überschaubar kompliziert und kann von einem entsprechenden Prozessor schnell und vor allem auch sehr genau durchgeführt werden.

Vorteilhaft befindet sich der zweite Längsabschnitt mit der größeren Wandstärke eher etwa im Mittelbereich der Rohrleitung bzw. die Mitte der Rohrleitung liegt in diesem zweiten Längsabschnitt mit der größeren zweiten Wandstärke.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:

Fig. 1      eine schematische Darstellung einer erfindungsgemäßen Dickstoffpumpe an einem Fahrzeug mit Auslegerarm und einer Förderleitung daran,

Fig. 2      einen Schnitt und eine Draufsicht auf eine erste Ausgestaltung einer erfindungsgemäßen Rohrleitung mit zwei unterschiedlich dicken Längsabschnitten bei einteiliger Ausgestaltung der Rohrleitung,

Fig. 3      eine andere Ausbildung der Erfindung ähnlich Fig. 2 mit einem verschleißfesten Innenrohr,

Fig. 4      eine Darstellung einer nicht erfindungsgemäßen Rohrleitung ähnlich Fig. 1 mit zwei unterschiedlichen Längsabschnitten mit jeweils unterschiedlicher Wandstärke,

Fig. 5      eine weitere nicht erfindungsgemäße Rohrleitung mit vier unterschiedlichen Längsabschnitten mit jeweils drei unterschiedlichen Wandstärken,

Fig. 6      eine weitere erfindungsgemäße Rohrleitung mit einer an einem durchgehenden Rohr angebrachten dicken Manschette und einer Schelle mit Dehnmessstreifen,

Fig. 7      einen Schnitt durch eine erfindungsgemäße Rohrleitung mit daran angebrachter Schelle, an deren Außenseite ein Dehnmessstreifen angeordnet ist,

Fig. 8      eine weitere nicht erfindungsgemäße Rohrleitung mit konisch gleichmäßig ansteigender Wandstärke samt spiralig aufgewickelter Glasfaser in der Schnittdarstellung und

Fig. 9      eine Ansicht von außen auf die Rohrleitung aus Fig. 8.

DETAILLIERTE BESCHREIBUNG DER AUSFÜHRUNGSBEISPIELE

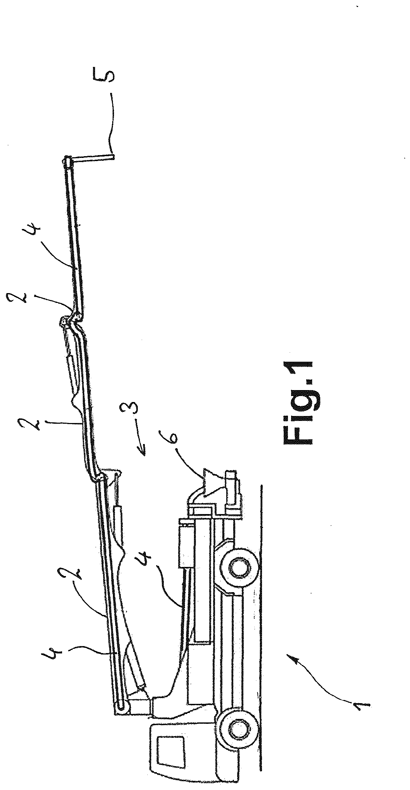

In der Fig. 1 ist ein Fahrzeug dargestellt, das einen dreigliedrigen Auslegerarm 2 und eine Betonpumpe 3 aufweist. Die Betonpumpe 3 ist die erfindungsgemäße Dickstoffpumpe und weist eine mehrteilige Förderleitung 4 am Auslegerarm 2 auf, die in ein Leitungsende 5 mündet. Hier kann gepumpter bzw. geförderter Beton austreten. Dazu wird der Beton von einer Pumpvorrichtung 6 in die Förderleitung 4 gepumpt. Je nach Länge der gesamten Förderleitung 4 und vor allem auch Höhe des Leitungsendes 5 muss erkennbar ein unterschiedlicher Druck von der Pumpvorrichtung 6 aufgebracht werden, ggf. ein sehr hoher Druck wie bekannt ist. Vor allem beim Pumpen von Beton wird, wie eingangs erläutert worden ist, die Leitung an ihrer Innenseite stark beansprucht und sozusagen abgenutzt bzw. abgescheuert. Die Wandstärke verringert sich also tatsächlich. Tritt nun eine Verstopfung auf wie eingangs erläutert, steigt der Druck stark an und somit besteht die Gefahr, dass bei hohem Druck die Förderleitung 4 an einer besonders dünnen Stelle platzen kann. Dies führt zu den eingangs genannten Gefahren. Dies gilt es also zu vermeiden, so dass man herausfinden möchte, wie stark die Abnutzung innen in der Förderleitung ist bzw. wie stark sich eine Wandstärke möglicherweise bereits reduziert hat. Des Weiteren wäre es natürlich sehr vorteilhaft, einen genannten plötzlichen starken Druckanstieg sehr schnell erfassen zu können, um die Pumpvorrichtung 6 herunterzufahren oder abzuschalten.

In die in Fig. 1 dargestellte Förderleitung 4 kann an beliebiger Stelle eine erfindungsgemäße Rohrleitung eingesetzt werden, welche dann sozusagen stellvertretend für die gesamte Förderleitung dazu dient, eine Abnutzung bezüglich einer Verringerung der Wandstärke zu erfassen. Des Weiteren soll damit auch der Druck innerhalb der Förderleitung 4 erfasst werden können. Eine solche Rohrleitung ist ausschnittsweise in Fig. 2 dargestellt in einer ersten Ausbildung der Erfindung. Diese Rohrleitung 11 kann beispielsweise 1 m lang sein und im unteren Bereich der Förderleitung 4, beispielsweise noch vor dem Auslegerarm 2 oder am untersten Glied des Auslegerarms 2, leicht entnehmbar montiert sein.

Die Rohrleitung 11 ist vorteilhaft ein exakt gerades Rohr und kann vorteilhaft einen radialsymmetrischen Querschnitt aufweisen. Ein Innenquerschnitt ist vorteilhaft kreisrund, besonders vorteilhaft sind dies auch die Außenquerschnitte. Es gibt erkennbar zwei Längsabschnitte 13a links und 13b rechts, die jeweils noch beliebig lang weitergeführt sein können. Der linke erste Längsabschnitt 13a weist eine Wandstärke s auf. Der rechte zweite Längsabschnitt 13b weist eine Wandstärke s+ds auf, ist hier etwas mehr als doppelt so dick, wie die Fig. 2 zeigt. Ein mittlerer Durchmesser der Rohrleitung 11 im zweiten Längsabschnitt 13b beträgt $d_m$, wobei dieser Durchmesser $d_m$ hier nur teilweise dargestellt ist. Mitten in der Rohrleitung ist durch die Punktierung ein Dickstoff 12 dargestellt, vorteilhaft Beton.

Wie auch aus der unten in Fig. 2 dargestellten Draufsicht auf die Rohrleitung 11 erkennbar ist, ist auf den ersten Längsabschnitt 13a ein erster Dehnmessstreifen 16a aufgebracht, und auf den Längsabschnitt 13b ein zweiter Dehnmessstreifen 16b, die hier identisch sind. Die Draufsicht zeigt, dass die beiden Dehnmessstreifen 16a und 16b mit exakt gleicher Längsausrichtung angeordnet sind, nämlich entlang der strichpunktiert dargestellten Mittelachse. Die beiden Dehnmessstreifen 16a und 16b sind dabei erkennbar etwas länger als breit ausgebildet, so dass ihre Erstreckung in Längsrichtung der Rohrleitung 11 etwa 30 % bis 50 % größer ist als ihre Erstreckung in Querrichtung dazu. Diese beiden Dehnmessstreifen sind vorteilhaft ausgebildet wie zuvor erläutert, nämlich mit jeweils zwei Teil-Dehnmessstreifen, die rechtwinklig zueinander verlaufen. Sie können also eine Dehnung in zwei Richtungen rechtwinklig zueinander erfassen und somit ggf. auch eine Dehnung in der Fläche.

Die Dehnmessstreifen 16a und 16b weisen jeweils eine relative Längenänderung $\varepsilon_{\text{längs1}}$ und $\varepsilon_{\text{längs2}}$ in Längsrichtung der Rohrleitung 11 auf, also entlang von zwei Teil-Dehnmessstreifen, sowie eine relative Längenänderung $\varepsilon_{\text{quer1}}$ und $\varepsilon_{\text{quer2}}$ in Richtung senkrecht dazu, also entlang von den zwei anderen Teil-Dehnmessstreifen. Die Dehnmessstreifen 16a und 16b sind flächig und fest auf die Außenseite der Rohrleitung 11 in den Längsabschnitten 13a und 13b aufgebracht, beispielsweise stabil und dauerhaft aufgeklebt. Dies ist für Dehnmessstreifen allgemein bekannt. Vorteilhaft arbeiten sie mit veränderlichen Widerständen, wobei eine entsprechende Kontaktierung und elektrische Auswertung hier nicht dargestellt ist. Das ist für den Fachmann aber leicht zu realisieren mit Standard-Lösungen für die Auswertung von Dehnmessstreifen.

Die Berechnung der Wandstärke s gemäß Fig. 2 wird im Folgenden dargelegt. Dabei wird davon ausgegangen, dass der Druck P im ersten Längsabschnitt 13a dem Druck P im zweiten Längsabschnitt 13b entspricht, so dass die beiden gleichgesetzt werden können.

Mit der Kesselformel ergibt sich die Tangentialspannung aus dem Innendruck, aus dem mittleren Durchmesser und der Wandstärke eines Rohres.

$$\sigma_t = \frac{P * d_m}{2 * s}$$

| P | Rohrinnendruck |
|---|---|
| $d_m$ | Mittlerer Durchmesser |
| $s$ | Wandstärke des Rohrs |

Die Tangentialspannung wird nicht durch Biegungen oder Axiallasten auf das Rohr verfälscht. Um sie korrekt messen zu können ist im ebenen Spannungszustand die Messung von 2 Dehnungen in 2 Richtungen erforderlich:

$$\varepsilon_t + \varepsilon_a * \vartheta = \frac{\sigma_t}{E} * (1 - \vartheta)^2$$

| $\varepsilon_t$ | Dehnung in Tangentialrichtung |
|---|---|
| $\varepsilon_a$ | Dehnung in Axialrichtung |
| $\vartheta$ | Querkontraktionszahl |
| $\sigma_t$ | Spannung in Tangentialrichtung |
| E | E-Modul |

Umgestellt:

$$\frac{(\varepsilon_t + \varepsilon_a * \vartheta) * E}{(1 - \vartheta)^2} = \sigma_t$$

Eingesetzt:

$$\frac{(\varepsilon_t + \varepsilon_a * \vartheta) * E}{(1 - \vartheta)^2} = \frac{P * d_m}{2 * s}$$

Wenn die Formel zweimal aufgestellt wird (mit s1 und s2=s1+ds als Wandstärke). Dabei wurde $d_{m1} \approx d_{m2}$ näherungsweise als konstant angesetzt. Es ist aber ebenso möglich, wenn auch mathematisch aufwändiger, mit den exakten Werten zu rechnen.

$$P_1 = \frac{(\varepsilon_{t1} + \varepsilon_{a1} * \vartheta) * E * 2 * s_1}{(1 - \vartheta)^2 * d_{m1}}$$

$$P_2 = \frac{(\varepsilon_t 2 + \varepsilon_{a2} * \vartheta) * E * 2 * (s_1 + ds)}{(1 - \vartheta)^2 * d_{m2}}$$

Gleichgesetzt und nach s1 aufgelöst und näherungsweise $d_{m1}$ gleich $d_{m2}$ gesetzt ergibt sich:

$$s_1 = \frac{(\varepsilon_{t2} + \varepsilon_{a2} * \vartheta) * ds}{(\varepsilon_{t1} + \varepsilon_{a1} * \vartheta - \varepsilon_{t2} - \varepsilon_{a2} * \vartheta)(\varepsilon_{t2} + \varepsilon_{a2} * \vartheta)}$$

Mit Hilfe dieser Gleichung kann dann s1 bestimmt werden. Dieser Wert kann nun geglättet werden. Und mit Hilfe der obenstehenden Gleichungen können nun P1 und P2 bestimmt werden. Diese Drücke P1 und P2 sollten gleich sein, in der Auswertung kann ein Mittelwert verwendet werden, der Unterschied zwischen den beiden Werten kann als Sensorkontrolle dienen. Alternativ kann auch auf einen Längs-Dehnmessstreifen verzichtet werden wenn P1 = P2 gesetzt und die fehlende Dehnung aus der Formel ermittelt wird. Die Dehnung in Tangentialrichtung $\varepsilon_t$ entspricht dabei $\varepsilon_{Quer}$, und die Dehnung in Axialrichtung $\varepsilon_a$ entspricht dabei $\varepsilon_{Längs}$, und zwar jeweils bezogen auf die beiden Längsabschnitte 13a und 13b.

In der Fig. 3 darunter ist eine alternative Rohrleitung 111 dargestellt, die wiederum einen radialsymmetrischen Querschnitt sowie einen kreisrunden Innenquerschnitt aufweist zum Fördern von Dickstoff 112 darin. Links ist ein erster Längsabschnitt 113a mit einem ersten Dehnmessstreifen 116a vorgesehen. Danach schließt sich nach rechts mit einem harten stufigen Übergang ein zweiter Längsabschnitt 113b mit einem zweiten Dehnmessstreifen 116b an. Innen ist die Rohrleitung 111 mit einem durchgehenden Innenrohr 118 versehen. Dieses Innenrohr 118 besteht aus einem verschleißfesteren Material als die Rohrleitung 111 an sich. Des Weiteren kann es als Verschleißteil aus der Rohrleitung 111 entfernt werden, beispielsweise weil es thermisch eingeschrumpft ist, sobald es zu stark verschleißt oder sogar durchgescheuert ist. Dann kann es durch ein neues Innenrohr 118 ersetzt werden, während die sonstige Rohrleitung 111, insbesondere auch mit den aufwändigen aufgeklebten Dehnmessstreifen 116a und 116b, weiterverwendet werden kann.

Für die zuvor bereits beschriebene Mathematik bzw. Berechnung eines Drucks bzw. einer Dehnung oder Wandstärke der Rohrleitung 111 kann in Anlehnung an die Angaben aus Fig. 2 eine Wandstärke des ersten Längsabschnitts 113a zusammen mit dem Innenrohr 118s zugrunde gelegt werden. Im zweiten Längsabschnitt 113b beträgt dann die Wandstärke s+ds wie dargestellt. Daraus ist auch zu ersehen, dass die Wandstärke des Innenrohrs 118 sozusagen voll zur Wandstärke der Rohrleitung 111 hinzuaddiert wird. Die hinzuaddierten Wandstärken s und s+ds sind erkennbar ähnlich wie in Fig. 2.

Wie aus der unteren Darstellung der Fig. 3 ersichtlich ist, sind Anordnung und Ausrichtung der Dehnmessstreifen 116a und 116b wie in Fig. 2 dargestellt. Des Weiteren sind auch hier diese beiden Dehnmessstreifen 116a und 116b identisch zueinander ausgebildet und vorteilhaft außen aufgeklebt.

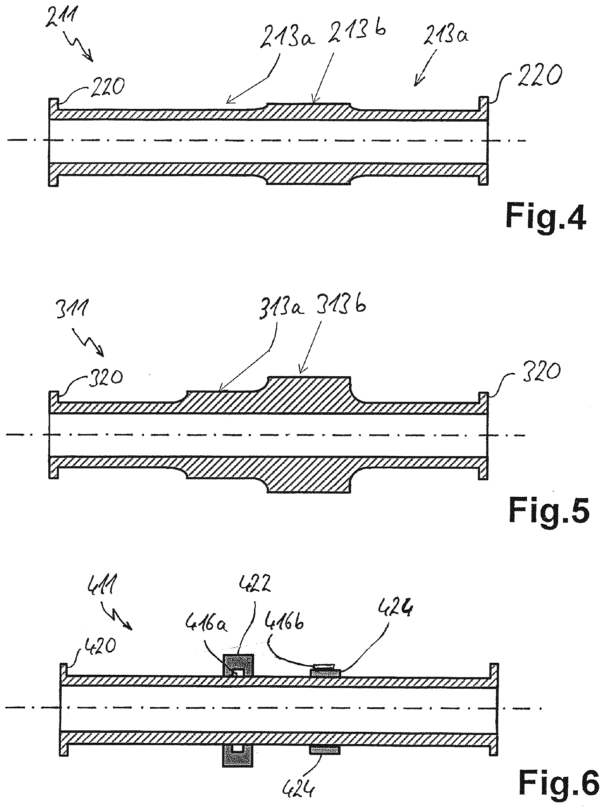

In der Fig. 4 ist in vereinfachter Darstellung eine Rohrleitung 211 dargestellt. Sie kann beispielsweise einen Meter lang sein und einen Durchmesser von etwa 20 cm aufweisen. Die Rohrleitung 211 ist an den Enden jeweils mit Flanschen 220 versehen, die einstückig angeformt sind, wie dies an sich bekannt sind. Sie dienen dazu, die Rohrleitung 211 mit anderen Rohrleitungen bzw. der Förderleitung auf bekannte Art und Weise zu verbinden.

Die Rohrleitung 211 weist weitgehend einen ersten Längsabschnitt 213a auf, nur in der Mitte bzw. etwas rechts von der Mitte ist ein Längsabschnitt 213b mit erkennbar dickerer Wandstärke vorgesehen. Die Rohrleitung 211 ist hier einstückig ausgebildet. Ein Übergang der Wandstärke zwischen dem mittleren Längsabschnitt 213b und den benachbarten Längsabschnitten 213a links und rechts davon ist nicht stufig gemäß den Fig. 2 und 3, sondern etwas abgerundet. Dies kann die mechanischen Eigenschaften der Rohrleitung 211 bzgl. Stabilität verbessern. Die Längsausdehnung des Längsabschnitts 213b beträgt etwa 15 % bis 20 % der gesamten Rohrleitung 211. Ihre Wandstärke beträgt etwa 150 % derjenigen des ersten Längsabschnitts 213a. Auf die Darstellung von Dehnmessstreifen ist auch hier verzichtet, diese sind im Längsabschnitt 213b und zumindest einem der Längsabschnitte 213a angeordnet, vorteilhaft entsprechend Fig. 2 und 3.

In der Fig. 5 ist eine weitere Rohrleitung 311 dargestellt mit Flanschen 320 an den Enden wie zuvor zu Fig. 4 beschrieben. Hier sind noch mehr unterschiedliche Wandstärkenbereiche vorgesehen, wobei von links beginnend die Wandstärke der Rohrleitung 311 erst relativ dünn ist. Dann erfolgt ein abgerundeter Anstieg zu einer um etwa 50 % bis 70 % dickeren Wandstärke im Längsabschnitt 313a. Nach etwa 15 % bis 20 % der Länge der gesamten Rohrleitung 311 erfolgt noch einmal ein abgerundeter Anstieg der Wandstärke zum Längsabschnitt 313b, wobei die beiden Längsabschnitte 313a und 313b in etwa gleich lang sind. Die Wandstärke des Längsabschnitts 313b beträgt um etwa 50 % mehr. Dann erfolgt ein abgerundeter Übergang zur relativ dünnen Wandstärke der ursprünglichen Rohrleitung 311 bis hin zum rechten Flansch 320. Bei dieser Rohrleitung 311 sind vorteilhaft Dehnmessstreifen entsprechend der Fig. 2 und 3 in den Längsabschnitten 313a und 313b angebracht, hier aber nicht eingezeichnet. Ein weiterer Dehnmessstreifen könnte auch noch links oder rechts der beiden Längsabschnitte direkt auf der Rohrleitung 311 aufgebracht sein, ähnlich wie dies für die Fig. 4 beschrieben ist. Zwei Dehnmessstreifen werden in der Regel aber als ausreichend angesehen. In der Fig. 6 ist eine nochmals weitere erfindungsgemäße Rohrleitung 411 dargestellt, die ebenfalls am linken und am rechten Ende Flasche 420 zur Befestigung aufweist. Hier sind an der an sich durchgängige mit gleichbleibendem Querschnitt versehenen Rohrleitung 411 keine Bereiche mit erhöhter Wandstärke vorgesehen, sondern links ein aufgeschrumpfter oder aufgeklebter dicker Verstärkungsring 422. Unter ihm, vorteilhaft in einer entsprechenden Ausnehmung, kann sich ein linker Dehnmessstreifen 416a befinden, der beispielsweise durch den Verstärkungsring 422 geschützt ist. An sich misst der Dehnmessstreifen 416a dann aber nur auf dem Außendurchmesser der Rohrleitung 411 an sich, so dass die Dicke des Verstärkungsrings 422 diese Messung nicht beeinflusst bzw. keine Auswirkungen darauf hat.

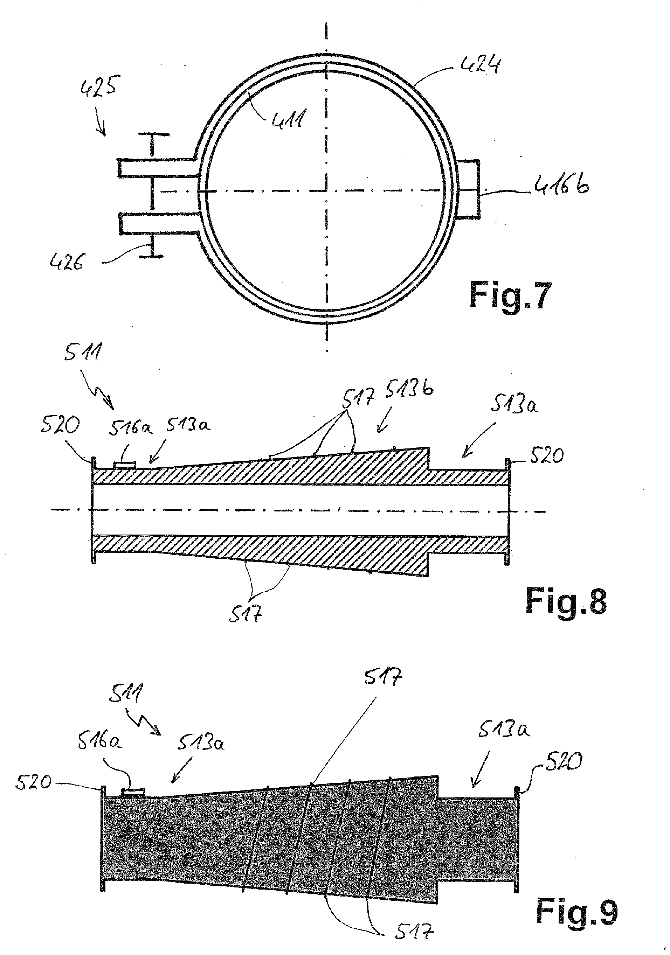

Rechts neben dem Verstärkungsring 422 ist eine Schelle 424 auf die Rohrleitung 411 aufgesetzt und eng anliegend befestigt, wie dies auch die Schnittdarstellung der Fig. 7 zeigt. Die Schelle 424 ist auf übliche Art und Weise ausgebildet und läuft weitgehend um die Rohrleitung 411 herum bis auf einen schmalen Abstand im Bereich von abstehenden Befestigungsabschnitten 425. Diese werden mit einer schematisch angedeuteten Schraube 426 verspannt, so dass die Schelle 424 fest auf der Rohrleitung 411 sitzt. Sie zählt also ähnlich wie der zweite Längsabschnitt 213b gemäß Fig. 4 als Erhöhung der Wandstärke der Rohrleitung in diesem Bereich, weil außen auf der Schelle 424 ein Dehnmessstreifen 416b aufgebracht ist. Dieser Dehnmessstreifen 416b kann dann beispielsweise zusammen mit dem vorgenannten ersten Dehnmessstreifen 416a direkt auf der Rohrleitung 411 die erfindungsgemäße Messung durchführen.

In den Fig. 8 und 9 ist eine nochmals weitere Abwandlung einer Rohrleitung 511 dargestellt, die an Flansche 520 an den Enden anschließend nach innen verlaufend jeweils einen ersten Längsabschnitt 513a aufweist, in etwa so ähnlich wie in der Fig. 5. Dazwischen liegt ein zweiter Längsabschnitt 513b, der eine größere Wandstärke aufweist, die allerdings nicht konstant bzw. gleichbleibend ist. Vielmehr steigt hier die Wandstärke kontinuierlich an beginnend bei der Wandstärke des ersten Längsabschnitts 513a bis zu einer Wandstärke ganz rechts, die etwa 200 % bis 250 % davon beträgt, also deutlich dicker ist. Hier kann entweder im ersten Längsabschnitt 513a ein erster Dehnmessstreifen 516a angeordnet sein. Alternativ kann im zweiten Längsabschnitt 513b eine längliche Glasfaser spiralig aufgewickelt sein mit ungefähr vier Windungen, wie dies hier dargestellt ist. In der Glasfaser 517 können mehrere Reflexionsebenen verwendet werden, was durch Fertigungsdefekte, die bei der Glasfaserherstellung entstehen, oder durch künstlich eingebrachte teilreflektierende Spiegel möglich ist. Dies ist eingangs erläutert worden. Dadurch gibt es unterschiedliche Längendehnungen bzw. Längenveränderung an den Abschnitten der spiralig aufgewickelten Glasfaser, welche aufgenommen und verrechnet werden können. Durch die spezielle konische Form der Rohrleitung 511 können mindestens zwei Messungen vorgenommen werden.

Diese Glasfaser 517 ist derart an eine Messvorrichtung angeschlossen und an einem Ende abgeschlossen, dass die Länge der einzelnen Abschnitte, in die sie durch die Reflexionsebenen und/oder die teilreflektierenden Spiegel unterteilt ist, durch ein hin- und herlaufendes Lichtsignal exakt bestimmt werden kann. Da die Glasfaser 517 entlang ihrer Länge völlig fest mit der Außenseite der Rohrleitung 511 bzw. dem zweiten Längsabschnitt 513b verbunden ist, längt sie sich mit der Aufweitung von Rohrleitung bzw. Längsabschnitt 513b entsprechend. Diese Aufweitung von Rohrleitung bzw. Längsabschnitt ist unterschiedlich, abhängig davon, wie dick sie jeweils sind aufgrund der konischen Form. Sie kommt ja von der eingangs beschriebenen fortlaufend in Richtung nach links abnehmenden Wandstärke im zweiten Längsabschnitt 513b, wodurch die Festigkeit der Rohrleitung abnimmt und sie damit durch den Druck des darin geförderten Dickstoffs stärker ausgedehnt werden kann. Die Berechnung einer jeweiligen Wandstärke erfolgt hier bei einer solchen Glasfaser 517 als Dehnmessmittel ähnlich oben dargelegt, nämlich auch durch ihre sich ändernde bzw. ansteigende Länge. Nur ist die Glasfaser 517 eben anders unterteilt in einzelne Abschnitte mit jeweils bestimmbarer Länge und Längenveränderung. Berechenbar ist die Wandstärke daraus auch auf alle Fälle, ggf. anhand von abgespeicherten Vergleichswerten.

**Patentansprüche**

1.  Rohrleitung (411), insbesondere zum Fördern von Dickstoff, mit Bestimmungsmitteln (416a, 416b, 424) zur Bestimmung eines Drucks in der Rohrleitung (411), mit:

    - einem ersten Längsabschnitt der Rohrleitung (411) mit einer ersten Wandstärke (s),
    - einem zweiten Längsabschnitt (424) der Rohrleitung mit einer zweiten Wandstärke (s+ds), die größer ist als die erste Wandstärke (s),
    wobei die Bestimmungsmittel (416a, 416b, 424) aufweisen:

        - ein erstes Dehnmessmittel (416a) an einer Außenseite des ersten Längsabschnitts (411),

- ein zweites Dehnmessmittel (416b) an einer Außenseite des zweiten Längsabschnitts (424),

wobei die Dehnmessmittel (416a, 416b) jeweils fest an den Längsabschnitten (411, 424) angebracht oder auf der Außenseite der Längsabschnitte (411, 424) aufgebracht sind, **dadurch gekennzeichnet, dass** die Rohrleitung (411) ein Rohr mit einer durchgehend konstanten ersten Wandstärke (s) aufweist, das den ersten Längsabschnitt bildet, wobei für den zweiten Längsabschnitt ein Außenrohr (424) als Manschette mit einer Wandstärke (ds) entsprechend dem Unterschied zwischen der ersten Wandstärke (s) und der zweiten Wandstärke (s+ds) auf das Rohr (411) aufgesetzt ist.

2. Rohrleitung nach Anspruch 1, **dadurch gekennzeichnet, dass** die Dehnmessmittel (416a, 416b) an der Außenseite der Längsabschnitte (411, 424) aufgebracht sind durch ein Verfahren aus der Gruppe: Aufkleben, Aufschrauben, Aufschweißen, Auflöten, Aufschrumpfen, Befestigen mit einer übergreifenden Schelle in Umfangsrichtung der Rohrleitung (411).

3. Rohrleitung nach Anspruch 1 oder 2, **dadurch gekennzeichnet, dass** die ersten Dehnmessmittel (416a) und die zweiten Dehnmessmittel (416b) in derselben Richtung verlaufen und/oder ihre Wirkrichtung bzw. ihre Messrichtung dieselbe ist, wobei sie insbesondere in Umfangsrichtung der Rohrleitung (411) verlaufen und ihre Wirkrichtung bzw. ihre Messrichtung in Umfangsrichtung verläuft.

4. Rohrleitung nach einem der vorhergehenden Ansprüche, **dadurch gekennzeichnet, dass** die Dehnmessmittel ausgewählt sind aus der Gruppe: Dehnmessstreifen (416a, 416b), elektrisch leitfähige Drähte, kraftmessende Einpress-Sensoren, Glasfasern.

5. Rohrleitung nach einem der vorhergehenden Ansprüche, **dadurch gekennzeichnet, dass** mindestens ein Dehnmessmittel (416a, 416b) und/oder der zweite Längsabschnitt (424) der Rohrleitung einen Abstand von mindestens einem Ende der Rohrleitung (411) aufweisen, der mindestens dem Innendurchmesser der Rohrleitung (411) entspricht, vorzugsweise mindestens dem doppelten Innendurchmesser der Rohrleitung (411) entspricht.

6. Rohrleitung nach einem der vorhergehenden Ansprüche, **dadurch gekennzeichnet, dass** mindestens ein Dehnmessmittel ein Dehnmessstreifen ist, der mehrere Teilstreifen aufweist, die jeweils einen Teil-Dehnmessstreifen bilden mit Empfindlichkeit entlang jeweils genau einer Richtung, vorzugsweise zwei Teil-Dehnmessstreifen, die rechtwinklig zueinander verlaufen.

7. Rohrleitung nach einem der vorhergehenden Ansprüche, **dadurch gekennzeichnet, dass** die Rohrleitung nur den ersten Längsabschnitt (411) und den zweiten Längsabschnitt (424) aufweist, vorzugsweise keine anderen oder weiteren Längsabschnitte mit unterschiedlicher Wandstärke und/oder unterschiedlichem Innendurchmesser, wobei vorzugsweise der erste Längsabschnitt (411) und/oder der zweite Längsabschnitt jeweils konstante Wandstärke (s, ds) aufweisen.

8. Rohrleitung nach einem der vorhergehenden Ansprüche, **dadurch gekennzeichnet, dass** der erste Längsabschnitt (411) direkt an den zweiten Längsabschnitt (424) anschließt, vorzugsweise mit einem Übergang in der Wandstärke, wobei insbesondere der Übergang zwischen der ersten Wandstärke und der zweiten Wandstärke abrupt ist als Stufe mit einem Radius am Innenwinkel von mindestens 10% des Innendurchmessers der Rohrleitung (411).

9. Rohrleitung nach einem der vorhergehenden Ansprüche, **dadurch gekennzeichnet, dass** das Außenrohr (424) als Manschette fest auf das Rohr (411) aufgesetzt ist, vorzugsweise aufgeschrumpft ist.

10. Rohrleitung nach einem der vorhergehenden Ansprüche, **dadurch gekennzeichnet, dass** in der Rohrleitung (411) ein durchgehendes Innenrohr (118) angeordnet ist mit konstantem Innendurchmesser und konstanter Wandstärke, wobei insbesondere die Wandstärke des Innenrohrs geringer ist als die erste Wandstärke (s).

11. Rohrleitung nach Anspruch 10, **dadurch gekennzeichnet, dass** das Innenrohr (118) verschleißfester ausgebildet ist als die Rohrleitung (411) im Übrigen bzgl. Verschleißfestigkeit an der Innenseite im Hinblick auf hindurchströmendes Material.

12. Dickstoffpumpe (3) mit einer Förderleitung (4) zum Fördern von Dickstoff, insbesondere Beton, mit einer Rohrleitung (411) nach einem der vorhergehenden Ansprüche, **dadurch gekennzeichnet, dass** die Rohrleitung (411) in einem Weg des geförderten Dickstoffs innerhalb der Förderleitung (4) angeordnet ist.

**13.** Verfahren zur Bestimmung eines Drucks in einer Rohrleitung (411) nach einem der Ansprüche 1 bis 11, mit den Schritten:

- Bestimmen einer Längenänderung des ersten Dehnmessmittels (416a) und des zweiten Dehnmessmittels (416b) in der Umfangsrichtung der Rohrleitung (411) oder in der Längsrichtung der Rohrleitung (411),
- Bestimmen der ersten Wandstärke (s) des ersten Längsabschnitts (411) unter Verwendung zumindest der Längenänderung beider Dehnmessmittel (416a, 416b) in Umfangsrichtung der Rohrleitung (411) oder in Längsrichtung der Rohrleitung (411) unter Verwendung der Querdehnzahl des Materials der Rohrleitung (411) und unter Verwendung der Differenz zwischen der ersten Wandstärke (s) und der zweiten Wandstärke (s+ds),
- aus der bestimmten ersten Wandstärke (s), mindestens der Längenänderungen in Umfangsrichtung und der Querdehnzahl des Materials der Rohrleitung (411) wird der Druck innerhalb des ersten Längsabschnitts bestimmt,
- auf ähnliche Art wird unter zusätzlicher Hinzunahme der Differenz zwischen der ersten Wandstärke (s) und der zweiten Wandstärke (s+ds) der Druck innerhalb des zweiten Längsabschnitts (424) bestimmt,
- durch Mitteln des ersten Drucks und des zweiten Drucks wird der Druck innerhalb der gesamten Rohrleitung (411) bestimmt.

**14.** Verfahren nach Anspruch 13, **dadurch gekennzeichnet, dass** für den Fall, dass innerhalb der Rohrleitung (411) ein Innenrohr (118) nach Anspruch 10 oder 11 vorhanden ist, die Wandstärke des Innenrohrs zur ersten Wandstärke (s) und zur zweiten Wandstärke (s+ds) hinzu addiert wird.

**15.** Verfahren nach Anspruch 13 oder 14, **dadurch gekennzeichnet, dass** bei den Berechnungen für beide Längsabschnitte (411, 424) der Rohrleitung (411) die Längenänderungen des Dehnmessmittels (416a, 416b) in Längsrichtung der Rohrleitung (411) und in Umfangsrichtung der Rohrleitung (411) berücksichtigt werden, vorzugsweise indem jeweils zu dem Produkt aus der Längenänderung in Längsrichtung und der Querdehnzahl die Längenänderung in Umfangsrichtung addiert wird für einen Längsabschnitt (411, 424, wobei diese Summe mit der Differenz der Wandstärken (s, ds) multipliziert wird, wobei dieses Ergebnis dividiert wird durch die Differenz zwischen dem Produkt aus der Längenänderung in Längsrichtung und der Querdehnzahl plus die Längenänderung in Umfangsrichtung für den ersten Längsabschnitt (411) und dem Produkt aus der Längenänderung in Längsrichtung und der Querdehnzahl plus die Längenänderung in Umfangsrichtung für den zweiten Längsabschnitt (424).

**Claims**

**1.** Pipeline (411), in particular for conveying viscous material, with means (416a, 416b, 424) for determining a pressure in the pipeline (411), with:

- a first longitudinal section of the pipeline (411) with a first wall thickness (s),
- a second longitudinal section (424) of the pipeline with a second wall thickness (s+ds) which is greater than the first wall thickness (s),
wherein the determining means (416a, 416b, 424) comprise:

- a first strain gauge means (416a) on an outer side of the first longitudinal section (411),
- a second strain gauge (416b) on an outer side of the second longitudinal section (424), wherein the strain gauges (416a, 416b) are each firmly attached to the longitudinal sections (411, 424) or applied to the outer side of the longitudinal sections (411, 424),

**characterized in that**
the pipeline (411) has a tube with a constant first wall thickness (s) throughout, which forms the first longitudinal section, wherein for the second longitudinal section an outer tube (424) is placed as a sleeve with a wall thickness (ds) corresponding to the difference between the first wall thickness (s) and the second wall thickness (s+ds) on the pipeline (411).

**2.** Pipeline according to claim 1, **characterized in that** the strain gauges (416a, 416b) are applied to the outside of the longitudinal sections (411, 424) by a method from the group consisting of gluing, screwing on, welding on, soldering on and shrinking on, and fastening with a clamp that engages around the pipeline (411) in the circumferential direction.

3. Pipeline according to claim 1 or 2, **characterized in that** the first strain gauge means (416a) and the second strain gauge means (416b) run in the same direction and/or their direction of action or their direction of measurement is the same, wherein they run in particular in the circumferential direction of the pipeline (411) and their direction of action or their direction of measurement runs in the circumferential direction.

4. Pipeline according to one of the preceding claims, **characterized in that** the strain measurement means are selected from the group consisting of: strain gauges (416a, 416b), electrically conductive wires, force-measuring press-fit sensors, glass fibres.

5. Pipeline according to one of the preceding claims, **characterized in that** at least one strain gauge (416a, 416b) and/or the second longitudinal section (424) of the pipeline have a distance from at least one end of the pipeline (411) which corresponds at least to the internal diameter of the pipeline (411), preferably corresponds at least to twice the internal diameter of the pipeline (411).

6. Pipeline according to one of the preceding claims, **characterized in that** at least one strain measurement means is a strain gauge which has a plurality of partial strips which each form a partial strain gauge with sensitivity along exactly one direction in each case, preferably two partial strain gauges which run at right angles to one another.

7. Pipeline according to one of the preceding claims, **characterized in that** the pipeline has only the first longitudinal section (411) and the second longitudinal section (424), preferably no other or further longitudinal sections with different wall thickness and/or different internal diameter, wherein preferably the first longitudinal section (411) and/or the second longitudinal section each have a constant wall thickness (s, ds).

8. Pipeline according to one of the preceding claims, **characterized in that** the first longitudinal section (411) directly adjoins the second longitudinal section (424), preferably with a transition in the wall thickness, in particular the transition between the first wall thickness and the second wall thickness being abrupt as a step with a radius at the internal angle of at least 10% of the internal diameter of the pipeline (411).

9. Pipeline according to one of the preceding claims, **characterized in that** the outer pipe (424) is firmly placed as a sleeve on the pipeline (411), preferably shrunk on.

10. Pipeline according to one of the preceding claims, **characterized in that** a continuous inner tube (118) is arranged in the pipeline (411) and has a constant inside diameter and constant wall thickness, in particular the wall thickness of the inner tube being less than the first wall thickness (s).

11. Pipeline according to claim 10, **characterized in that** the inner pipe (118) is designed to be more wear-resistant than the rest of the pipeline (411) with regard to wear resistance on the inside with respect to material flowing through.

12. High density solids pump (3) with a delivery line (4) for delivering high density solids, in particular concrete, with a pipeline (411) according to one of the preceding claims, **characterized in that** the pipeline (411) is arranged in a path of the delivered high density solids within the delivery line (4).

13. Method for determining a pressure in a pipeline (411) according to one of the claims 1 to 11, comprising the steps of:

determining a change in length of the first strain gauge means (416a) and the second strain gauge means (416b) in the circumferential direction of the pipeline (411) or in the longitudinal direction of the pipeline (411), determining the first wall thickness (s) of the first longitudinal section (411) using at least the change in length of both strain gauges (416a, 416b) in the circumferential direction of the pipeline (411) or in the longitudinal direction of the pipeline (411) using the transverse strain index of the material of the pipeline (411) and using the difference between the first wall thickness (s) and the second wall thickness (s+ds),

- from the determined first wall thickness (s), at least the changes in length in the circumferential direction and the Poisson's ratio of the material of the pipeline (411), the pressure within the first longitudinal section is determined,
- in a similar way, the pressure within the second longitudinal section (424) is determined by additionally adding the difference between the first wall thickness (s) and the second wall thickness (s+ds),
- the pressure within the entire pipeline (411) is determined by averaging the first pressure and the second pressure.

**14.** Method according to claim 13, **characterized in that**, in the event that an inner pipe (118) according to claim 10 or 11 is present within the pipeline (411), the wall thickness of the inner pipe is added to the first wall thickness (s) and to the second wall thickness (s+ds).

**15.** Method according to claim 13 or 14, **characterized in that**, in the calculations for both longitudinal sections (411, 424) of the pipeline (411), the changes in length of the strain measuring means (416a, 416b) in the longitudinal direction of the pipeline (411) and in the circumferential direction of the pipeline (411), preferably by adding the change in length in the circumferential direction to the product of the change in length in the longitudinal direction and the Poisson's ratio for a longitudinal section (411, 424), wherein this sum is multiplied by the difference in wall thicknesses (s, ds), wherein this result is divided by the difference between the product of the change in length in the longitudinal direction and the Poisson's ratio plus the change in length in the circumferential direction for the first longitudinal section (411) and the product of the change in length in the longitudinal direction and the Poisson's ratio plus the change in length in the circumferential direction for the second longitudinal section (424).

**Revendications**

**1.** Conduite (411), en particulier pour le transport de matière épaisse, avec des moyens de détermination (416a, 416b, 424) pour déterminer une pression dans la conduite (411), avec :

   - une première section longitudinale de la conduite (411) avec une première épaisseur de paroi (s),
   - une deuxième section longitudinale (424) de la conduite ayant une deuxième épaisseur de paroi (s+ds) qui est supérieure à la première épaisseur de paroi (s),
   les moyens de détermination (416a, 416b, 424) comprenant :

   - un premier moyen de mesure d'allongement (416a) sur un côté extérieur de la première partie longitudinale (411),
   - un deuxième moyen de mesure de l'allongement (416b) sur un côté extérieur de la deuxième section longitudinale (424),

   les moyens de mesure de l'allongement (416a, 416b) étant respectivement fixés de manière rigide aux parties longitudinales (411, 424) ou appliqués sur l'extérieur des parties longitudinales (411, 424),
   **caractérisé en ce que**
   la conduite (411) comprend un tube ayant une première épaisseur de paroi (s) constante sur toute sa longueur et formant le premier tronçon longitudinal, un tube extérieur (424) étant monté sur la conduite (411) pour le deuxième tronçon longitudinal, sous forme de manchon ayant une épaisseur de paroi (ds) correspondant à la différence entre la première épaisseur de paroi (s) et la deuxième épaisseur de paroi (s+ds).

**2.** Conduite selon la revendication 1, **caractérisée en ce que** les moyens de mesure d'allongement (416a, 416b) sont appliqués à l'extérieur des portions longitudinales (411, 424) par un procédé choisi parmi les suivants : collage, vissage, soudage, brasage, frettage, fixation par un collier chevauchant dans la direction circonférentielle de la conduite (411).

**3.** Conduite selon la revendication 1 ou 2, **caractérisée en ce que** les premiers moyens de mesure d'allongement (416a) et les deuxièmes moyens de mesure d'allongement (416b) s'étendent dans la même direction et/ou leur direction d'action ou leur direction de mesure est la même, en particulier ils s'étendent dans la direction périphérique de la conduite (411) et leur direction d'action ou leur direction de mesure s'étend dans la direction périphérique.

**4.** Conduite selon l'une quelconque des revendications précédentes, **caractérisée en ce que** les moyens de mesure de la contrainte sont choisis dans le groupe constitué par: les jauges de contrainte (416a, 416b), les fils électriquement conducteurs, les capteurs de force à insertion, les fibres optiques.

**5.** Conduite selon l'une quelconque des revendications précédentes, **caractérisée en ce qu'**au moins un moyen de mesure d'allongement (416a, 416b) et/ou la deuxième portion longitudinale (424) de la conduite présentent une distance par rapport à au moins une extrémité de la conduite (411) qui correspond au moins au diamètre intérieur de la conduite (411), de préférence qui correspond au moins au double du diamètre intérieur de la conduite (411).

**6.** Conduite selon l'une quelconque des revendications précédentes, **caractérisée en ce qu'**au moins un moyen de mesure de contrainte est une jauge de contrainte comprenant plusieurs sous-jauges formant chacune une jauge de contrainte partielle avec une sensibilité suivant exactement une direction respective, de préférence deux jauges de contrainte partielles s'étendant perpendiculairement l'une à l'autre.

7. Conduite selon l'une quelconque des revendications précédentes, **caractérisée en ce que** la conduite ne comprend que la première section longitudinale (411) et la deuxième section longitudinale (424), de préférence aucune autre section longitudinale ou d'autres sections longitudinales ayant une épaisseur de paroi différente et/ou un diamètre intérieur différent, de préférence la première section longitudinale (411) et/ou la deuxième section longitudinale ayant chacune une épaisseur de paroi constante (s, ds).

8. Conduite selon l'une quelconque des revendications précédentes, **caractérisée en ce que** la première section longitudinale (411) se raccorde directement à la deuxième section longitudinale (424), de préférence avec une transition dans l'épaisseur de paroi, la transition entre la première épaisseur de paroi et la deuxième épaisseur de paroi étant en particulier abrupte sous forme d'un gradin avec un rayon à l'angle intérieur d'au moins 10% du diamètre intérieur de la conduite (411).

9. Conduite selon l'une quelconque des revendications précédentes, **caractérisée en ce que** le tube extérieur (424) est monté fixement sur la conduite (411) sous forme de manchon, de préférence fretté.

10. Conduite selon l'une quelconque des revendications précédentes, **caractérisée en ce que** dans la conduite (411) est disposé un tube intérieur continu (118) de diamètre intérieur constant et d'épaisseur de paroi constante, l'épaisseur de paroi du tube intérieur étant notamment inférieure à la première épaisseur de paroi (s).

11. Conduite selon la revendication 10, **caractérisée en ce que** le tube intérieur (118) est plus résistant à l'usure que la conduite (411) par ailleurs en ce qui concerne la résistance à l'usure sur le côté intérieur par rapport au matériau qui s'écoule à travers.

12. Pompe à matières épaisses (3) avec une conduite de transport (4) pour le transport de matières épaisses, en particulier de béton, avec une conduite (411) selon l'une quelconque des revendications précédentes, **caractérisée en ce que** la conduite (411) est disposée dans un chemin de la matière épaisse transportée à l'intérieur de la conduite de transport (4).

13. Procédé de détermination d'une pression dans une conduite (411) selon l'une quelconque des revendications 1 à 11, comprenant les étapes consistant à :

   - déterminer une variation de longueur du premier moyen de jauge de contrainte (416a) et du deuxième moyen de jauge de contrainte (416b) dans la direction circonférentielle de la conduite (411) ou dans la direction longitudinale de la conduite (411),
   - déterminer la première épaisseur de paroi (s) de la première section longitudinale (411) en utilisant au moins la variation de longueur des deux moyens de mesure de l'allongement (416a, 416b) dans la direction circonférentielle de la conduite (411) ou dans la direction longitudinale de la conduite (411) en utilisant le coefficient d'allongement transversal du matériau de la conduite (411) et en utilisant la différence entre la première épaisseur de paroi (s) et la deuxième épaisseur de paroi (s+ds),
   - la pression à l'intérieur de la première section longitudinale est déterminée à partir de la première épaisseur de paroi (s) déterminée, au moins des variations de longueur dans la direction circonférentielle et du coefficient d'allongement transversal du matériau de la conduite (411),
   - de la même manière, en ajoutant en outre la différence entre la première épaisseur de paroi (s) et la deuxième épaisseur de paroi (s+ds), on détermine la pression à l'intérieur de la deuxième section longitudinale (424),
   - en calculant la moyenne de la première pression et de la deuxième pression, on détermine la pression à l'intérieur de l'ensemble de la conduite (411).

14. Procédé selon la revendication 13, **caractérisé en ce que**, dans le cas où un tube interne (118) selon la revendication 10 ou 11 est présent à l'intérieur de la conduite (411), l'épaisseur de paroi du tube interne est ajoutée à la première épaisseur de paroi (s) et à la deuxième épaisseur de paroi (s+ds).

15. Procédé selon la revendication 13 ou 14, **caractérisé en ce que** les calculs pour les deux tronçons longitudinaux (411, 424) de la conduite (411) tiennent compte des variations de longueur du moyen de mesure d'allongement (416a, 416b) dans la direction longitudinale de la conduite (411) et dans la direction circonférentielle de la conduite (411), de préférence en ajoutant à chaque fois au produit de la variation de longueur dans la direction longitudinale et de l'indice de dilatation transversale la variation de longueur dans la direction circonférentielle pour un tronçon longitudinal (411, 424), cette somme étant multipliée par la différence des épaisseurs de paroi (s, ds), ce résultat étant divisé par la différence entre le produit de la variation de longueur dans la direction longitudinale et du coefficient d'allongement transversal plus la variation de longueur dans la direction circonférentielle pour la première section longitudinale (411) et le produit de la variation de longueur dans la direction longitudinale et du coefficient d'allongement transversal plus la variation de longueur dans la direction circonférentielle pour la deuxième section longitudinale (424).

**Fig.1**

EP 3 963 301 B1

**Fig.2**

**Fig.3**

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1411336 A1
- DE 10238163 A1
- DE 19727102 A1
- WO 2019032470 A1
- DE 4206576 A1
- DE 102016110299 A1
- DE 102015109450 A1